# EUROPEAN PATENT SPECIFICATION

(11) **EP 3 487 317 B1**
(45) Date of publication and mention of the grant of the patent: **03.03.2021**
(21) Application number: 16767026.4
(22) Date of filing: 20.07.2016
(51) Int. Cl.: A23L 19/00, A23L 7/109, A23L 7/113, A23L 33/105

(54) **PROCESS FOR MANUFACTURE OF A FOOD PASTA MADE FROM DURUM WHEAT SEMOLINA AND VEGETABLES**
VERFAHREN ZUR HERSTELLUNG VON TEIGWAREN HERGESTELLT AUS HARTWEIZENGRIESS UND GEMÜSE
PROCEDE DE PRODUCTION DE PÂTES ALIMENTAIRES PREPAREES DE SEMOULE DE BLE DUR ET DE LEGUMES

(43) Date of publication of application: 29.05.2019
(73) Proprietor: Natali, Ottavio, 40054 Budrio Loc. Mezzolara (BO) (IT)
(72) Inventor: Natali, Ottavio, 40054 Budrio Loc. Mezzolara (BO) (IT)
(74) Representative: Emmi, Mario
(86) International application number: PCT/IT2016/000178
(87) International publication number: WO 2018/015977

(56) References cited:
- EP-A1- 0 314 298
- EP-A1- 0 642 742
- EP-A1- 0 705 541
- EP-A1- 2 036 442
- EP-A1- 2 468 112
- US-A- 5 124 168
- US-A- 5 258 196
- DATABASE WPI Week 198814 Thomson Scientific, London, GB; AN 1988-096793 XP002764416, & JP S63 49051 A (YAMATO E) 1 March 1988 (1988-03-01)
- Anonymous: "Durum wheat semolina pasta and soft wheat : do you know the difference?Blog Fabianelli ...dal 1860", , 22 September 2015 (2015-09-22), pages 1-5, XP055321089, Retrieved from the Internet: URL:http://web.archive.org/web/20150922235 127/http://blog.fabianelli.it/en/durum-whe at-semolina-and-soft-wheat-do-you-know-the -difference/ [retrieved on 2016-11-21]
- ANTONIETTA BAIANO ET AL: "Use of a toasted durum whole meal in the production of a traditional Italian pasta: chemical, mechanical, sensory and image analyses", INTERNATIONAL JOURNAL OF FOOD SCIENCE AND TECHNOLOGY., vol. 43, no. 9, 2008, pages 1610-1618, XP055321073, GB ISSN: 0950-5423, DOI: 10.1111/j.1365-2621.2007.01632.x
- Donatella Peressini ET AL: "RHEOLOGY OF WHEAT DOUGHS FOR FRESH PASTA PRODUCTION: INFLUENCE OF SEMOLINA-FLOUR BLENDS AND SALT CONTENT", JOURNAL OF TEXTURE STUDIES, vol. 31, no. 2, 1 July 2000 (2000-07-01), pages 163-182, XP055644155, ISSN: 0022-4901, DOI: 10.1111/j.1745-4603.2000.tb01415.x
- Giampiero Sacchetti ET AL: "Effect of semolina particle size on the cooking kinetics and quality of spaghetti", Procedia Food Science, vol. 1, 1 January 2011 (2011-01-01), pages 1740-1745, XP055644161, ISSN: 2211-601X, DOI: 10.1016/j.profoo.2011.09.256
- MURRIETA-PAZOS INGRID ET AL: "Evolution of particle structure during water sorption observed on different size fractions of durum wheat semolina", POWDER TECHNOLOGY - ELECTROSTATIC PHENOMENA IN PARTICULATE PROCESSES, ELSEVIER, BASEL (CH), vol. 255, 1 November 2013 (2013-11-01), pages 66-73, XP028662762, ISSN: 0032-5910, DOI: 10.1016/J.POWTEC.2013.10.049
- Frank A Manthey ET AL: "Effects of Break-Roll Differential on Semolina and Spaghetti Quality", CEREAL CHEMISTRY, 1 January 2001 (2001-01-01), pages 368-371, XP055644168, Retrieved from the Internet: URL:https://onlinelibrary.wiley.com/doi/pd f/10.1094/CCHEM.2001.78.3.368 [retrieved on 2019-11-19]

## Description

### Technical field

The present invention refers to a procedure for the preparation of a special pasta substantially constituted by a mixture of durum wheat semolina and vegetables, and the use thereof.

### Background art

Varied are the types of food pasta in commerce, in which said pastas have different compositional, food and format features.

Just as a way of example, a reference classification (that will be followed in the present description) of the food pasta is reported in the Italian regulations, precisely in the Presidential decree no. 187/2001, subsequently modified by the Presidential decree no. 41/2013. With reference to said regulations, the pasta of the present invention falls within the category "SPECIAL PASTAS" (Art. 7) and, specifically, it is a "SPECIAL PASTA MADE FROM DURUM WHEAT SEMOLINA AND WITH VEGETABLES, PRE-SALTED OR NOT".

Naturally, there exist analogous regulations in each country and they are specific for that country.

As per the pasta commonly known and used in the kitchen, it normally has to be cooked in plenty of salted water for variable times (also long, according to the hardness of the wheat semolina used) before being seasoned and consumed. Further, pasta has, normally, a high calorie content that advises against the assumption thereof in quantities that are not moderate.

For example, EP 2036442 A1 discloses fresh food pasta comprising fresh vegetables. The vegetables are present in the dough up to 50%. In a preferred form, the flour is taken from durum, semolina, rice flour, alone or in combination. However, EP 2036442 A1 does not disclose the potential use of two different durum semolina-based flours.

Moreover, EP 0642742 A1 discloses the use of combinations of different types of flours. It notes that samples prepared from 100% durum flours are superior in overall acceptability, better colour and texture. However, EP 0642742 A1 is silent about the use of different types of durum flours or durum semolina flours.

### Technical problem

It would be useful to have at disposal a type of pasta of reduced cooking times with respect to the traditional pastas; which has a reduced calorie content and greater digestibility; which has, further, different nutritional profiles suitable for the different food needs; and which, besides, can be eventually cooked without salt.

The present invention has the aim of giving an adequate answer to the needs explained above.

### Summary of invention

The main aim of the present invention is a new procedure for preparing a new type of food pasta, eventually salted, comprising an adequate mixture of durum wheat semolina and at least one type of vegetable, as defined in the attached independent claim 1.

In such a manner, the pasta cooks in extremely inferior times with respect to the traditional products and results extremely lighter and more digestible, as also described in detail in the continuation of the present description.

Such type of pasta is also surprisingly suitable for being fried, something that *per se* is not feasible with traditional pastas, resulting in a delicious snack.

Further aims of the present invention are defined in the attached dependent claims.

### Detailed description of the invention

The special pasta prepared by the inventive procedure essentially comprises:
a) a specific mixture of durum wheat semolina flours consisting of
   - an effective quantity of re-ground durum wheat semolina flour, said quantity being comprised between the 40% and the 80% in weight, with reference to the total weight of the mixture of the flours; preferably, comprised between the 45% and the 75% in weight, with reference to the total weight of the mixture of the flours; more preferably, comprised between the 50% and the 70% in weight, with reference to the total mixture of the flours;
   - an effective quantity of durum wheat semolina flour, said quantity being comprised between the 60% and the 20% in weight, with reference to the total weight of the mixture of the flours; preferably, comprised between the 55% and the 25% in weight, with reference to the total weight of the mixture of the flours; more preferably, comprised between the 50% and the 30% in weight, with reference to the total weight of the mixture of the flours;
b) an effective quantity of at least one vegetable, said quantity being comprised between the 25% and the 50% in weight, with reference to the total weight of the dough a)+b); preferably, comprised between the 30% and the 45% in weight, with reference to the total weight of the dough a)+b); more preferably, comprised between the 33% and the 42% in weight, with reference to the total weight of the dough a)+b); said vegetable being preferably selected from the group consisting of beetroot; artichoke; red cabbage; black cabbage; peas; pumpkin; asparagus; a mixture of ginger and turmeric; any type of edible mushroom, cultivated or not (for example, champignon mushrooms and/or porcini mushrooms, or any mixture of edible mushrooms, including dried mushrooms rehydrated before use); tomatoes; peppers; aubergines; thistle; celery; fennel; onion; carrots; spinaches; chard; chicory; borage; zucchini; Jerusalem artichokes; rosemary; basil; mint; sage; paprika; garlic (for example, dehydrated powder garlic); or a mixture thereof; preferably, said vegetable is selected from beetroot; artichoke; red cabbage; black cabbage; peas; pumpkin; asparagus; a mixture of ginger and turmeric; any type of edible mushroom, cultivated or not (for example, champignon mushrooms and/or porcini mushrooms, or any mixture of edible mushrooms, including dried mushrooms rehydrated before use), or a mixture thereof.

The special pasta prepared by the inventive procedure further comprises, optionally:
c) an effective quantity of kitchen food salt, said quantity being comprised between the 0,5% and the 2% in weight, with respect to the overall weight of the components; preferably, comprised between the 0,7% and the 1,8% in weight, with respect to the overall weight of the components; more preferably, comprised between the 0,9% and the 1,6% in weight, with respect to the overall weight of the components; still more preferably, comprised between the 1,1% and the 1,4% in weight, with respect to the overall weight of the components.

The special pasta prepared by the inventive procedure further comprises, optionally:
d) an effective quantity of a food vegetal oil, said quantity being comprised between the 0,05% and the 1,5% in weight, with respect to the overall weight of the components; preferably, comprised between the 0,08% and the 0,15% in weight, with respect to the overall weight of the components; more preferably, of about the 0,1% in weight, with respect to the overall weight of the components; for example, the 0,1% in weight, with respect to the overall weight of the components; said vegetal oil being selected from the group consisting of rice oil, olive oil, sunflower seed oil, corn oil, soy oil, grapevine seed oil, palm oil, and the like; preferably, rice oil.

The special pasta prepared by the inventive procedure preferably of:
a) a mixture of durum wheat semolina flours consisting of
   - the re-ground durum wheat semolina flour in a quantity comprised between the 50% and the 70% in weight, with reference to the total weight of the mixture of the flours;
   - the durum wheat semolina flour in a quantity comprised between the 50% and the 30% in weight, with reference to the total weight of the mixture of the flours;
b) at least one vegetable in a quantity comprised between the 33% and the 42% in weight, with reference to the total weight of the dough a)+b); said vegetable being preferably selected from the group consisting of beetroot, artichoke, red cabbage, black cabbage, peas, pumpkin, asparagus, a mixture of ginger and turmeric, mushrooms, or a mixture thereof;
c) kitchen food salt in a quantity comprised between the 1,1% and the 1,4% in weight, with respect to the overall weight of the components;
d) an effective quantity of rice oil of the 0,1% in weight, with respect to the overall weight of the components.

Advantageously, the re-ground durum wheat semolina flour absorbs moisture quicker than the normal semolina flour.

Advantageously, the durum wheat semolina flour absorbs moisture slowly, increases the mechanical seal of the pasta and improves the organoleptic features thereof.

As per the preferred vegetables of the invention, the following represent only a selected example, but not at all limiting, of vegetables to be used in the implementation of the present invention. For instance, the following are advantageously provided with the following property features:
- Beetroot: it contains iron, sodium, calcium, magnesium and phosphorus (useful in case of digestive problems, they stimulate the production of gastric juices, and of anemias); further, it contains fibers (they help the intestinal function); besides, it contains also vitamins of the B group, folates, C vitamin (antioxidant).
- Artichoke: it contains calcium, phosphorus, magnesium, iron and potassium (useful in case of diabetes and hypertension); further, it contains fibers (they help the intestinal function); besides, it contains chloroquine and cynarin (they help the bile flow and diuresis and contrast cholesterol); besides, it contains polyphenols (they contrast the oxidative action of free radicals and the processes of formation of tumors).
- Cabbages (red and black): they contain sulfur, calcium, selenium, magnesium, potassium, phosphorus, copper, sodium (with known antitumor features to protect the intestine); further, they contain fibers (they help the intestinal function); besides, they contain also vitamins of the B group (among which folic acid), C vitamin (antioxidant), E vitamin.
- Peas: they contain plenty of potassium, magnesium, iron, calcium (useful in low-calorie diets); further, they contain fibers (they help the intestinal function); besides, they contain also folic acid, C vitamin (antioxidant).
- Pumpkin: it contains calcium, iron, potassium, phosphorus (it is hypocaloric and has diuretic properties); further, it contains carotenoids and peptic substances, as well as vitamins of the B group, A vitamin, C vitamin (antioxidant).
- Asparagus: they contain potassium, phosphorus, calcium (diuretic and antioxidant properties); further, they contain fibers (they help the intestinal function); besides, they contain also folic acid, A vitamin, C vitamin (antioxidant).
- Ginger: it contains calcium, sodium, phosphorus, iron, magnesium, potassium, manganese (it has anti-inflammation properties and stimulates the digestion); further, it contains fibers (it helps the intestinal function); besides, it contains also B vitamin, C vitamin (antioxidant), E vitamin.
- Turmeric: it contains a series of active principles, among which curcumin (it has anti-inflammation, depurative, antioxidant, antitumor properties).

In any case, the employ of other vegetables, taken singularly or in an adequate combination of them and/or with the previously described vegetables, falls totally within the field of the scope of the present invention and is clearly within the reach of the technician/cook expert in the field.

Totally unexpectedly, the specific mixture of the flours described above, in combination with the vegetable/s indicated, and the reciprocal quantities of the same have conferred the resulting pasta the desired features described before and in the continuation of the present description. In brief, the specific mixture above has conferred the resulting pasta a very short cooking time (comprised, for instance, from 1-1,5 min to a maximum of 3-4 min) ; it has allowed, further, to obtain a low-calorie product (see final Table 1), provided with greater digestibility and with a high nutritional content, suitable for the different food needs; besides, the pasta can be eventually cooked without salt (in the version in which such dough is already salted) or it can also be fried.

### Preparation of the pasta of the invention

The procedure to prepare the special pasta of the present invention as defined in claim 1 preferably comprises the following phases:
i) steam the vegetable/s at low temperature (preferably, at 80°C-98°C) in a traditional apparatus suitable for steam cooking (for example, in a steam oven) for the necessary time to obtain the desired cooking; eventually, in case vegetables with a greater content of water have to be cooked, adding a further dry cooking phase of at least 10 min to the preceding cooking; preferably, in this case, the optimal working can be done in a combined oven;
ii) subsequently, let the cooked vegetables of phase i) cool at environmental temperature and reduce them to the consistency of a purée with an adequate traditional cutter, optionally adding (if desired or if considered necessary) salt and/or vegetal oil (preferably, rice oil);
iii) aside, mix the flours, in the desired quantity, in a suitable traditional kneading machine at environmental temperature; then, add the purée of vegetable/s derived from phase ii) and knead at environmental temperature for a time not superior to 10 min, preferably not superior to 7 min, more preferably, not superior to 4 minutes;
iv) put the dough derived from phase iii) in a traditional extruder, suitable for the preparation of the pasta, in such quantities as to be able to be extruded in a maximum time of 8-13 min, preferably of no more than 10 min, and extrude the dough at a temperature of <55 °C, preferably <50 °C, still more preferably comprised between 45-48 °C [this because we work at extreme moisture levels and the pasta in the exit phase from the extruder has to be subject to an air jet at environmental temperature to take the surface moisture off];
v) dry the extruded pasta in phase iv) for a period of time preferably comprised between 1h and 8hs, more preferably from 2hs to 6hs, under a laminar air motion/flow at a temperature inferior to 35°C, for instance, at environmental temperature.

At the end of said phase v), if a shorter drying time has been adopted (for example, from 1h to 3h), the pasta obtained normally has a residual moisture almost equal or slightly superior to 24%. On the contrary, when a longer drying time is adopted (for example, from 5h to 8h), the pasta obtained has a residual moisture of about 12,5%.

The optimal range of moisture is usually intermediate between such extreme values.

In any case, the moisture is not binding for the purposes of the conservation of the product because, after the drying, the procedure of production foresees an optional further phase vi) of reduction of the temperature of the pasta to about - 24°C followed by the packing (traditional) and by the subsequent conservation in an appropriate container (for instance, a freezer) at a strongly negative temperature (like a temperature comprised between -18 and -24 °C, for example of about - 21 °C).

In a preferred embodiment of the invention, the drying phase v) above is followed by a phase vi) of reduction of the temperature to - 24 °C, followed by a phase of conservation of the product finished and packaged at about - 21 °C.

All this allows, as explained here below, to choose freely between using the pasta conventionally (cooking it in a pot or in a pasta cooker) or frying it (in a frying machine, eventually also industrial, or in a frying pan) just extracted from the freezer.

Leaving as it is that the pasta of the present invention can be commercialized and consumed either fresh (with moisture of ≥ 24%) or dried (with a maximum moisture of about 12,5%), in a particularly preferred embodiment, said pasta can be commercialized as frozen pasta, which permits to set/confer a range of moisture also intermediate between the one of fresh pasta and the one of dried pasta.

This choice, in combination with the desired ingredients (in particular, the specific mixture of the flours above and the mixture with the vegetable/s, as described above) and with the procedure of production to obtain it (as described above), unexpectedly render the pasta of the present invention idoneous not only for the classic cooking in water (with or without the addition of salt as desired), in a pot or in a pasta cooker, but also particularly suitable/perfect to be collected from the freezer and fried as it is (for example, in a frying machine, also industrial, or in a frying pan) to then leave it to cool and use it as a salty snack immediately or almost immediately, or as a packaged salty snack (for instance in a modified atmosphere or, anyway, with analogous precautions to those of the common salty snacks, such as potato chips) to be sold through the great distribution to be consumed alone or combined, for instance, with a cocktail. In this last case, it has been found that the fried pasta of the invention, in its form of snack, had a nutritional content advantageously superior to that of any type of fried snack in commerce (indifferently from the fact that the same is based on potatoes, corn, sintered products of potato starch, and the like).

As further described in detail below, the pasta prepared by the inventive procedure provides advantageous relevant technical effects also in its traditional use, when it is cooked in water (salted or not salted), in a pot or in a pasta cooker. In fact, it has been demonstrated that it reduces significantly the cooking times (see Table 1 below), allows not to salt the water in which it has to be cooked, presents nutritional profiles that are significant and different/connected to the type of vegetable/s used inside of it, preserving (thanks precisely to the very short cooking time) in great part the nutrients and the beneficial properties thereof for the organism.

Moreover, (always thanks to the specific precautionary combination of the ingredients described above, the flours and the vegetable/s used) said pasta has demonstrated to have less calories with respect to the normal semolina pasta and a greater digestibility; therefore, it has resulted suitable also for people undergoing a low-calorie diet, for diabetic people, for children that do not love vegetables and that can thus assimilate the nutritional principles thereof eating pasta.

The pasta prepared by the inventive procedure can be realized in any desired format (just as a way of example, but not limiting, of the short type such as gramigna, sedani, maccheroni, penne, tortiglioni, paccheri, fusilli, untwisted fusilli, cavatielli, orecchiette and so on, or of the long type such as spaghetti, spaghettini, bucatini, tagliolini, tagliatelle, guitar spaghetti and so on) and introducing the most different vegetables, (the vegetables cited as nutritionally favourite in the present description are only an example, absolutely not limiting, of the wide possibilities of the equivalent variations/differentiations that can be provided by the technician/cook expert in the desired selection of the vegetables, according to the nutritional quality thereof or also only aesthetic and/or organoleptic; for instance, according to the colour, the fragrance and the taste/flavour that the same confer to the pasta.

Advantageously, further, the introduction of the vegetable/s has rendered superfluous the use of the water as ingredient in the phase of kneading the ingredients (as described before, eventually, the addition of a small quantity of oil is enough (preferably rice oil).

The nature of the ingredients that can be used allows to find them in the market, also certified as biological, therefore such pasta can be advantageously commercialized both in the normal version and in the bio (biological) version.

The use of gluten-free ingredients (for instance, the flours) is advantageously possible, producing in such a way a pasta that is suitable for the food needs of the people that suffer from celiac disease.

In the following Table 1 are shown in summary form, for the reader's convenience, the main technical features of the special pasta prepared by the inventive procedure, in comparison with analogous features of a number of traditional commercial pastas.

Table 1 - Features of the pasta prepared by the inventive procedure in comparison with the traditional commercial pasta:

| | | |
|---|---|---|
| AA sample of pasta prepared by the inventive procedure, salted and seasoned with rice oil, containing the 31% of beetroot*** and with a residual moisture superior to the 24%* | Features of the pasta sample (detected values) | Comparison notes with the values obtained from a selection of pastas purchased in commerce (min-max values) |
| Drying time | from 2h to 6h | -- |
| Cooking time in a pasta cooker of the professional type | From a minimum of 1-1,5 min to a maximum of 3-4 min according to the format of the pasta; the optimal average time is of about 2 min for all types of pasta | The normal semolina pasta requires from 7 to 11 (but also 15-18) min |
| | The water in the pasta cooker MUST NOT be salted | The water MUST BE salted and it is almost impossible to maintain constant the concentration of the salt in the pasta cooker |
| NUTRITIONAL VALUES | Sample of 100 gr (with moisture of >24% *) [between brackets the values for the same sample, calculated at 12,5% of moisture **] | Commercial pasta (100 gr) |
| Proteins (gr) | 10,15 (12,18) | 12 - 14,5 |
| Fats (gr) | 0,42 (0,504) | 1,5 - 2 |
| (of which saturated fatty acids) (gr) | 0,11 (0,132) | 0,1 - 0,3 |
| Carbohydrates (gr) | 51,1 (61,32) | 69,5 - 74 |
| (of which sugars) (gr) | 8,3 (9,96) | 2,9 - 3,5 |
| Total food fiber (gr) | 6,0 (7,2) | 2,9 - 3,0 |
| Energy (Kcal) | 261 (313,2) | 356 - 362 |
| Kitchen salt (gr) | 1,12 (1,344) | 0,005 - 0,04 |
| Minerals, Vitamins, other nutrients | (as reported before, qualitatively) | -- |
| Frying time, if applied in frying machine at 170 °C | From 1 min to 2 min | Not applicable (neither using fresh pasta before drying) |

| | | |
|---|---|---|
| * : = at 30% of moisture **: considering the moisture value of the pasta at the 30%, the values relative at 12,5% of moisture have been calculated using the formula of the weight loss (100-initial moisture)/(100-final moisture) = Final weight % that in the present case becomes (100-30)/(100-12,5) = 0,8. As by drying only the moisture is lost and not the other substances, the values relative to the various substances of the 100 g of initial product have been reparameterized multiplying them by 1,2. For instance, (carbohydrates in 100 g of pasta at 12,5% of moisture) = (carbohydrates in 100 g of pasta at 30% of moisture) x 1,2 because from 100 g of pasta at 30%, once dried at 12,5%, there remain 80 g. ***: the present sample of the test has been selected with a minimum content of vegetable (31%), in fact inferior with respect to the particularly preferred values of the invention (33%-42%), to highlight that the significantly positive nutritional values detected are surely better, with respect to those of the traditional pastas, already in the cases that should be considered "less favourite". It results clearly, therefore, that for superior contents of vegetable said nutritional values will result even better. | | |

It is evident from the data and from the considerations reported above in Table 1 which significant and unexpected advantages the pasta prepared by the inventive procedure has given to the state of the art relative to the special pastas, in particular to those with vegetables.

### Industrial applicability

The special food pasta, optionally salty, and with the vegetables, prepared by the inventive procedure, has demonstrated that it can provide advantageous features with respect to the traditional pasta, such as inferior cooking time in water (salted or not salted), an inferior calorie content and a greater digestibility, in addition to an improved, significant differentiated supply of useful nutrients for the organism. Further, it provides also the possibility of being conserved in freezing state and subsequently fried at the moment of the consumption, or to be further conserved/packaged as such and used as a snack.

## Claims

1. A procedure for the preparation of a pasta, comprising the phases of:
i) Preparing a mixture of durum wheat semolina flours consisting of:
- an effective quantity of re-ground durum wheat semolina flour, said quantity being comprised from 40 % to 80% in weight, with reference to the total weight of the mixture of the flours;
- an effective quantity of durum wheat semolina flour, said quantity being comprised from 60% to 20% in weight, with reference to the total weight of the mixture of the flours;
ii) Preparing an effective quantity of at least one vegetable, said quantity being comprised between 25% and 50% in weight, with reference to the total weight of the dough from i)+ii);
iii) Steaming the vegetable/s; then, letting the cooked vegetable/s cool at environmental temperature and reducing them to the consistency of a puree;
iv) Mixing the mixture of the flours of phase i) with the puree of vegetable/s of phase iii) and kneading;
v) Putting the dough obtained in an extruder suitable for the preparation of the pasta and extruding the dough;
vi) Drying the extruded pasta.

2. The procedure of claim 1, wherein in phase ii) said vegetable is selected from the group consisting of beetroot, artichoke, red cabbage, black cabbage, peas, pumpkin, asparagus, a mixture of ginger and turmeric, any type of edible mushroom; tomatoes; peppers; aubergines; thistle; celery; fennel; onion; carrots; spinaches; chard; chicory; borage; zucchini; rosemary; basil; mint; sage; Jerusalem artichokes; or a mixture thereof.

3. The procedure of claim 2, wherein said vegetable is selected from the group consisting of beetroot, artichoke, red cabbage, black cabbage, peas, pumpkin, asparagus, a mixture of ginger and turmeric, any type of edible mushroom; or a mixture thereof.

4. The procedure of any of the preceding claims, wherein in phase iii) are added salt and/or vegetal oil, wherein said salt is kitchen food salt in an amount comprised between 0,5% and 2% in weight, with respect to the overall weight of the components, and said vegetal oil is a food vegetal oil in an amount comprised between 0,05% and 1,5% in weight, with respect to the overall weight of the components.

5. The procedure of claim 4, wherein said oil is selected from the group consisting of rice oil, olive oil, sunflower seed oil, corn oil, soy oil.

6. The procedure of claim 5, wherein said oil is rice oil.

7. The procedure of any of the preceding claims, wherein in phase v) the dough is extruded in a maximum time of 10 min.

8. The procedure of any of the preceding claims, wherein in phase vi) the pasta is dried in a time comprised between 2h and 6h.

9. The procedure of any of the claims from 1 to 8, further comprising:
vii) a phase of reducing the temperature to - 24 °C, followed by a phase of packaging and conservation of the finished product at about - 21 °C.

10. The procedure of any of the claims from 1 to 9, further comprising:
viii) a phase of frying the finished product.

11. The use of the pasta obtained according to the procedure of claim 10, wherein said product is under the form of a fried snack, whether salty or not, for immediate or belated consumption.

## Patentansprüche

1. Verfahren zur Herstellung einer Pasta, das die folgenden Phasen umfasst:
i) Herstellen einer Mischung von Mehlen aus Hartweizengrieß, bestehend aus:
- einer wirksamen Menge neu gemahlenen Mehles aus Hartweizengrieß, wobei die genannte Menge 40 bis 80 Gewichtsprozente, bezogen auf das Gesamtgewicht der Mehlmischung, enthält;
- einer wirksamen Menge an Mehl aus Hartweizengrieß, wobei die genannte Menge 60 bis 20 Gewichtsprozente, bezogen auf das Gesamtgewicht der Mehlmischung, enthält;
ii) Zubereiten einer wirksamen Menge mindestens eines Gemüses, wobei die genannte Menge zwischen 25 und 50 Gewichtsprozente, bezogen auf das Gesamtgewicht des Teigs aus i)+ii), enthält;
iii) Dämpfen des/der Gemüses/Gemüse; dann, Abkühlenlassen des/der gekochten Gemüses/Gemüse bei Umgebungstemperatur und Reduzieren auf die Konsistenz eines Pürees;
iv) Vermischen der Mischung aus den Mehlen der Phase i) mit dem Gemüsepüree/den Gemüsepüree/n der Phase iii) und Kneten;
v) Einbringen des erhaltenen Teiges in eine Spritzmaschine, der für die Herstellung von Pasta geeignet ist, und Ausspritzen des Teiges;
vi) Trocknen der ausgespritzten Pasta.

2. Verfahren gemäß Anspruch 1, wobei in Phase ii) das genannte Gemüse aus der Gruppe bestehend aus Rote Bete, Artischocke, Rotkohl, Schwarzkohl, Erbsen, Kürbis, Spargel, einer Mischung aus Ingwer und Kurkuma, jeder Art von essbaren Pilzen, Tomaten, Paprika, Auberginen, Distel, Sellerie, Fenchel, Zwiebel, Karotten Spinat, Mangold, Chicoree, Borretsch, Zucchini, Rosmarin, Basilikum, Minze, Salbei, Topinambur, oder einer Mischung davon ausgewählt wird.

3. Verfahren gemäß Anspruch 2, wobei das genannte Gemüse aus der Gruppe bestehend aus Rote Beete, Artischocke, Rotkohl, Schwarzkohl, Erbsen, Kürbis, Spargel, einer Mischung aus Ingwer und Kurkuma, jeder Art von essbaren Pilzen oder einer Mischung davon ausgewählt wird.

4. Verfahren gemäß einem der vorhergehenden Ansprüche, wobei in Phase iii) Salz bzw. Pflanzenöl zugegeben werden, wobei das genannte Salz ein Speisesalz in einer Menge zwischen 0,5 und 2 Gewichtsprozent, bezogen auf das Gesamtgewicht der Komponenten, vorhanden ist und das genannte Pflanzenöl ein pflanzliches Lebensmittelöl in einer Menge zwischen 0,05 und 1,5 Gewichtsprozent, bezogen auf das Gesamtgewicht der Komponenten, vorhanden ist.

5. Verfahren gemäß Anspruch 4, wobei das genannte Öl aus der Gruppe bestehend aus Reisöl, Olivenöl, Sonnenblumenkernöl, Maisöl, Sojaöl ausgewählt wird.

6. Verfahren gemäß Anspruch 5, wobei das genannte Öl Reisöl ist.

7. Verfahren gemäß einem der vorhergehenden Ansprüche, wobei in Phase v) der Teig in einer maximalen Zeit von 10 min ausgespritzt wird.

8. Verfahren gemäß einem der vorhergehenden Ansprüche, wobei in Phase vi) die Pasta in einer Zeit zwischen 2h und 6h getrocknet wird.

9. Verfahren gemäß einem der Ansprüche 1 bis 8, das ferner umfasst:
vii) eine Phase der Absenkung der Temperatur auf -24 °C, gefolgt von einer Phase der Verpackung und Konservierung des fertigen Produkts bei etwa -21 °C.

10. Verfahren gemäß einem der Ansprüche 1 bis 9, das ferner umfasst:
viii) eine Phase des Frittierens des fertigen Produktes.

11. Verwendung der nach dem Verfahren gemäß Anspruch 10 erhaltenen Pasta, wobei das genannte Produkt in Form eines frittierten Snacks, salzig oder nicht salzig, zum sofortigen oder späteren Verzehr vorliegt.

## Revendications

1. Procédé pour la préparation d'un type de pâtes, comprenant les phases suivantes :
i) préparation d'un mélange de farines de semoule de blé dur composé des éléments suivants :
- une quantité efficace de farine de semoule de blé dur rebroyée, ladite quantité étant comprise entre 40% et 80% en poids, par rapport au poids total du mélange des farines ;
- une quantité efficace de farine de semoule de blé dur, ladite quantité étant comprise entre 60% et 20% en poids, par rapport au poids total du mélange des farines ;
ii) préparation d'une quantité efficace d'au moins un légume, ladite quantité étant comprise entre 25% et 50% en poids, par rapport au poids total de la pâte produite en i) + ii) ;
iii) cuisson à la vapeur du ou des légumes) ; puis, refroidissement du ou des légumes cuits à température ambiante et leur réduction à la consistance d'une purée ;
iv) mélange du mélange des farines de la phase i) avec la purée du ou des légumes de la phase iii) et leur pétrissage ;
v) mise de la pâte obtenue dans une extrudeuse adaptée à la préparation des pâtes et extrusion de la pâte ;
vi) séchage des pâtes extrudées.

2. Procédé selon la revendication 1, dans lequel dans la phase ii) ledit légume est choisi dans le groupe constitué par les produits suivants : betterave, artichaut, chou rouge, chou noir, pois, courge, asperges, un mélange de gingembre et de curcuma, tout type de champignon comestible ; tomates ; poivrons ; aubergines ; chardon ; céleri ; fenouil ; oignon ; carottes ; épinards ; bettes ; chicorée ; bourrache ; courgettes ; romarin ; basilic ; menthe ; sauge ; topinambours ; ou un mélange de ceux-ci.

3. Procédé selon la revendication 2, dans lequel ledit légume est choisi dans le groupe constitué par les produits suivants : betterave, artichaut, chou rouge, chou noir, pois, courge, asperges, un mélange de gingembre et de curcuma, tout type de champignon comestible ; ou un mélange de ceux-ci.

4. Procédé selon l'une quelconque des revendications précédentes, où dans la phase iii) sont ajoutés du sel et/ou de l'huile végétale, dans lequel ledit sel est un sel alimentaire de cuisine en une quantité comprise entre 0,5% et 2% en poids, par rapport au poids total des composants, et dans lequel ladite huile végétale est une huile végétale alimentaire en une quantité comprise entre 0,05% et 1,5% en poids, par rapport au poids total des composants.

5. Procédé selon la revendication 4, dans lequel ladite huile est choisie dans le groupe constitué par l'huile de riz, l'huile d'olive, l'huile de tournesol, l'huile de maïs et l'huile de soja.

6. Procédé selon la revendication 5, dans lequel ladite huile est de l'huile de riz.

7. Procédé selon l'une quelconque des revendications précédentes, dans lequel dans la phase v) la pâte est extrudée en un temps maximum de 10 min.

8. Procédé selon l'une quelconque des revendications précédentes, dans lequel dans la phase vi) les pâtes sont séchées en un temps compris entre 2h et 6h.

9. Procédé selon l'une quelconque des revendications 1 à 8, comprenant en outre :
vii) une phase de réduction de la température à -24 °C, suivie d'une phase de conditionnement et de conservation du produit fini à environ -21 °C.

10. Procédé selon l'une quelconque des revendications 1 à 9, comprenant en outre :
viii) une phase de friture du produit fini.

11. Utilisation des pâtes obtenues selon le procédé de la revendication 10, dans lequel ledit produit se présente sous la forme d'une collation frite, salée ou non, pour consommation immédiate ou différée.
